(19) Europäisches Patentamt
European Patent Office
Office européen des brevets

(11) Veröffentlichungsnummer: **0 207 412**
**B1**

(12) **EUROPÄISCHE PATENTSCHRIFT**

(45) Veröffentlichungstag der Patentschrift: **04.04.90**

(51) Int. Cl.[5]: **C 07 F 9/18,** C 07 F 9/12, C 07 F 9/547, C 07 F 9/58

(21) Anmeldenummer: **86108513.2**

(22) Anmeldetag: **23.06.86**

(54) **Verfahren zur Herstellung von (Thiono)Phosphorsäureestern.**

(30) Priorität: **05.07.85 DE 3524055**

(43) Veröffentlichungstag der Anmeldung:
**07.01.87 Patentblatt 87/02**

(45) Bekanntmachung des Hinweises auf die Patenterteilung:
**04.04.90 Patentblatt 90/14**

(84) Benannte Vertragsstaaten:
**AT BE CH DE FR GB IT LI NL**

(56) Entgegenhaltungen:
**FR-A-1 525 066**
**FR-A-2 322 870**

(73) Patentinhaber: **BAYER AG**
**D-5090 Leverkusen 1 Bayerwerk (DE)**

(72) Erfinder: **Maurer, Fritz, Dr.**
**Roeberstrasse 8**
**D-5600 Wuppertal 1 (DE)**

**EP 0 207 412 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft eine neues Verfahren zur Herstellung von (Thiono)Phosphorsäureestern aus (Thiono)Phosphorsäurehalogeniden und Hydroxy-Derivaten in Gegenwart eines bicyclischen Amins als Katalysator.

Es ist bereits bekannt, daß man (Thiono)Phosphorsäureester erhalten kann, wenn man Hydroxy-Derivate in Gegenwart von anorganischen Basen wie z.B. Natrium- oder Kaliumcarbonat mit (Thiono)-Phosphorsäurehalogeniden umsetzt (vergl. z.B. DE—OS—3 426 007, 3 423 639, 3 326 510 und 3 317 824). die Nachteile dieses Verfahrens bestehen darin, daß sehr lange Verweilzeiten erforderlich sind, große Mengen an (schwer abtrennbaren) isomeren Nebenprodukten entstehen und die Ausbeuten dadurch häufig sehr unbefriedigend sind.

Weiterhin ist es aus der FR—A—1 525 066 bereits bekannt, in allgemeiner Form tert.-Amine in katalytischen Mengen bei der Umsetzung von Phenolen bzw. hydroxysubstituierten Heterocyclen mit O,O-Dialkyl(thiono)phosphorsäureesterhalogenid einzusetzen. Die Verwendung von bicyclischen Aminen wird jedoch in diesem Dokument weder beschrieben noch nahegelegt.

Es wurde nun gefunden, daß man (Thiono)Phosphorsäureester der Formel (I)

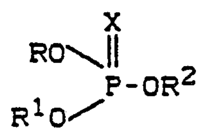

(I)

in welcher

X für Sauerstoff oder Schwefel steht,

R und $R^1$ gleich oder verschieden sind und für Alkyl stehen und

$R^2$ für gegebenenfalls einfach bis dreifach durch Fluor, Chlor, Brom, Nitro, Cyano, $C_1$—$C_4$-Alkyl, $C_1$—$C_4$-Alkoxy, Phenyl, $C_1$—$C_4$-Alkylthio, Halogen-$C_1$—$C_4$-alkyl, Halogen-$C_1$—$C_4$-alkoxy, Halogen-$C_1$—$C_4$-alkylthio, $C_1$—$C_4$-Alkylsulfinyl, $C_1$—$C_4$-Alkylsulfonyl, $C_1$—$C_2$-Alkylsulfinyl-$C_1$—$C_4$-alkyl, $C_1$—$C_2$-Alkylsulfonyl-$C_1$—$C_4$-alkyl und/oder $C_1$—$C_4$-Alkoxycarbonyl substituiertes Phenyl; für gegebenenfalls einfach bis dreifach durch Chlor, Brom, $C_1$—$C_4$-Alkyl, $C_1$—$C_4$-Alkoxy, $C_1$—$C_4$-Alkylthio, $C_3$—$C_6$-Cycloalkyl, Phenyl, Di-($C_1$—$C_4$)-alkylamino, $C_1$—$C_2$-Alkoxy-$C_1$—$C_4$-alkyl, $C_1$—$C_2$-Alkylthio-$C_1$—$C_4$-alkyl, $C_1$—$C_2$-Alkylthio-$C_1$—$C_4$-Alkoxy, $C_1$—$C_2$-Alkylsulfinyl-$C_1$—$C_4$-alkyl und/oder $C_1$—$C_2$-Alkylsulfonyl-$C_1$—$C_4$-alkyl substituiertes Pyrimidin-2-yl, Pyrimidin-4-yl oder Pyrimidin-5-yl; für gegebenenfalls einfach oder zweifach durch $C_1$—$C_4$-Alkyl und/oder Phenyl substituiertes 1,2,4-Triazol-3-yl; sowie für gegebenenfalls einfach bis dreifach durch Chlor, Brom und/oder Halogen-$C_1$—$C_2$-alkyl substituiertes Pyrid-2-yl steht,

erhält, wenn man Hydroxy-Derivate der Formel (II)

$$R^2\text{—OH} \qquad (II)$$

in welcher

$R^2$ die oben angegebene Bedeutung hat,

oder deren entsprechenden Ammonium-, Alkali- oder Erdalkalimetallsalze, mit (Thiono)Phosphorsäurehalogeniden der Formel (III)

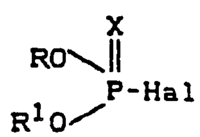

(III)

in welcher

X, R und $R^1$ die oben angegebenen Bedeutungen haben und

Hal für Halogen, insbesondere Chlor oder Brom, steht,

in Gegenwart eines bicyclischen organischen Amins als Katalysator, gegebenenfalls in Gegenwart von Säureakzeptoren, und in Gegenwart eines Verdünnungsmittels bei Temperaturen zwischen 0 und 120°C umsetzt.

Als bicyclische organische Amine, welche als Katalysatoren wirken, kommen bevorzugt bicyclische Amine mit 1 oder 2 Brückenkopf-Stickstoffatomen, vorzugsweise 1,4-Diazabicyclo-(2,2,2)-octan (DABCO) und Chinuclidin in Frage, besonders bevorzugt ist DABCO. Das bicyclische organische Amin wird mindestens in katalytischen Mengen eingesetzt, jedoch kann es gegebenenfalls auch in molarer Menge zur Bindung des bei der Umsetzung entstehenden Halogenwasserstoffs eingesetzt werden, wenn kein weiterer Säureakzeptor eingesetzt wird.

Überraschenderweise ist es möglich, mit Hilfe des erfindungsgemäßen Verfahrens die Umsetzung mit sehr kurzen Verweilzeiten in hoher Ausbeute und Reinheit durchzuführen. Dies ist umso überraschender,

als nach dem Stand der Technik die Bildung von Nebenprodukten in beträchtlichem Ausmaß hätte erwartet werden müssen.

Als Alkyl R und $R^1$ steht geradkettiges oder verzweigtes Alkyl mit vorzugsweise 1 bis 10, insbesondere 1 bis 6 und besonders bevorzugt 1 bis 4, Kohlenstoffatomen, Beispielhaft seien Methyl, Ethyl, n-Propyl, i-Propyl, n-Butyl, i-Butyl, sec.-Butyl, tert.-Butyl, n-Pentyl, 1-Methyl-butyl, 2-Methyl-butyl, 3-Methyl-butyl, 1-Ethyl-propyl, 2,2-Dimethyl-propyl und 1,2-Dimethyl-propyl genannt. Besonders bevorzugte Alkylreste R und $R^1$ sind Ethyl und i-Propyl.

Die als gegebenenfalls substituiert bezeichneten Reste können einen oder mehrere, gleiche oder verschiedene Substituenten enthalten. Als bevorzugte Substituenten seien aufgeführt: Halogen, Nitro, Cyano, $C_1$—$C_4$-Alkyl, $C_1$—$C_4$-Alkoxy, $C_1$—$C_4$-Alkylthio, Halogen-$C_1$—$C_4$-alkyl, Halogen-$C_1$—$C_4$-alkoxy, Halogen-$C_1$—$C_4$-alkylthio, $C_1$—$C_4$-Alkylsulfinyl, $C_1$—$C_4$-Alkylsulfonyl, $C_3$—$C_6$-Cycloalkyl, Phenyl, Di-($C_1$—$C_4$)-alkylamino, $C_1$—$C_2$-Alkoxy-$C_1$—$C_4$-alkyl, $C_1$—$C_2$-Alkylthio-$C_1$—$C_4$-alkyl, $C_1$—$C_2$-Alkylthio-$C_1$—$C_4$-alkoxy, $C_1$—$C_2$-Alkylsulfinyl-$C_1$—$C_4$-alkyl, $C_1$—$C_2$-Alkylsulfonyl-$C_1$—$C_4$-alkyl und/oder $C_1$—$C_4$-Alkoxycarbonyl. Bevorzugte Substituenten sind Halogen (insbesondere Chlor oder Brom), Nitro und/oder $C_1$—$C_4$-Alkyl.

X steht bevorzugt für Schwefel.

Bevorzugt werden mit Hilfe des erfindungsgemäßen Verfahrens diejenigen Verbindungen der Formel (I) hergestellt,
in welcher

X für Sauerstoff oder Schwefel (vorzugsweise für Schwefel) steht,

R und $R^1$ gleich oder verschieden sind und für $C_1$—$C_6$-Alkyl stehen und

$R^2$ für gegebenenfalls einfach bis dreifach durch Fluor, Chlor, Brom, Nitro, Cyano, $C_1$—$C_4$-Alkyl, $C_1$—$C_4$-Alkoxy, Phenyl, $C_1$—$C_4$-Alkylthio, Halogen-$C_1$—$C_4$-alkyl, Halogen-$C_1$—$C_4$-alkoxy, Halogen-$C_1$—$C_4$-alkylthio, $C_1$—$C_4$-Alkylsulfinyl, $C_1$—$C_4$-Alkylsulfonyl, $C_1$—$C_2$-Alkylsulfinyl-$C_1$—$C_4$-alkyl, $C_1$—$C_2$-Alkylsulfonyl-$C_1$—$C_4$-alkyl und/oder $C_1$—$C_4$-$C_1$—$C_4$-Alkoxycarbonyl substituiertes Phenyl; für gegebenenfalls einfach bis dreifach durch Chlor, Brom, $C_1$—$C_4$-Alkyl, $C_1$—$C_4$-Alkoxy, $C_1$—$C_4$-Alkylthio, $C_3$—$C_6$-Cycloalkyl, Phenyl, Di-($C_1$—$C_4$)-alkylamino, $C_1$—$C_2$-Alkoxy-$C_1$—$C_4$-alkyl, $C_1$—$C_2$-Alkylthio-$C_1$—$C_4$-alkyl, $C_1$—$C_2$-Alkylthio-$C_1$—$C_4$-Alkoxy, $C_1$—$C_2$-Alkylsulfinyl-$C_1$—$C_4$-alkyl und/oder $C_1$—$C_2$-Alkylsulfonyl-$C_1$—$C_4$-alkyl substituiertes Pyrimidin-2-yl, Pyrimidin-4-yl oder Pyrimidin-5-yl; für gegebenenfalls einfach oder zweifach durch $C_1$—$C_4$-Alkyl und/oder Phenyl substituiertes 1,2,4-Triazol-3-yl; sowie für gegebenenfalls einfach bis dreifach durch Chlor, Brom und/oder Halogen-$C_1$—$C_2$-alkyl substituiertes Pyrid-2-yl steht.

Erfindungsgemäß wurden besonders bevorzugt Verbindungen der Formel (I) erhalten, in welchen

X für Sauerstoff oder Schwefel (vorzugsweise für Schwefel) steht,

R und $R^1$ gleich oder verschieden sind und für $C_1$—$C_4$-Alkyl (vorzugsweise Ethyl oder i-Propyl) stehen und

$R^2$ für 4-Nitrophenyl, Pyrimidin-2-yl, 5-Brom-pyrimidin-2-yl, 5-tert.-Butyl-pyrimidin-2-yl, 2-i-Propyl-4-methyl-pyrimidin-6-yl oder 2,3,5-Trichlorpyridin-6-yl steht.

Halogen bedeutet (wo nicht anderes angegeben wird) Fluor, Chlor, Brom, Iod, vorzugsweise Fluor, Chlor und Brom, insbesondere Chlor.

Verwendet man beispielsweise für das erfindungsgemäße Verfahren 4-Hydroxy-5-methoxy-2-methylthiomethyl-pyrimidin und O-Ethyl-O-i-propyl-thionophosphorsäurechlorid als Ausgangsstoffe, in Gegenwart von katalytischen Mengen 1,4-Diazabicyclo-(2,2,2)-octan (DABCO), so kann die Reaktion durch das folgende Formelschema skizziert werden:

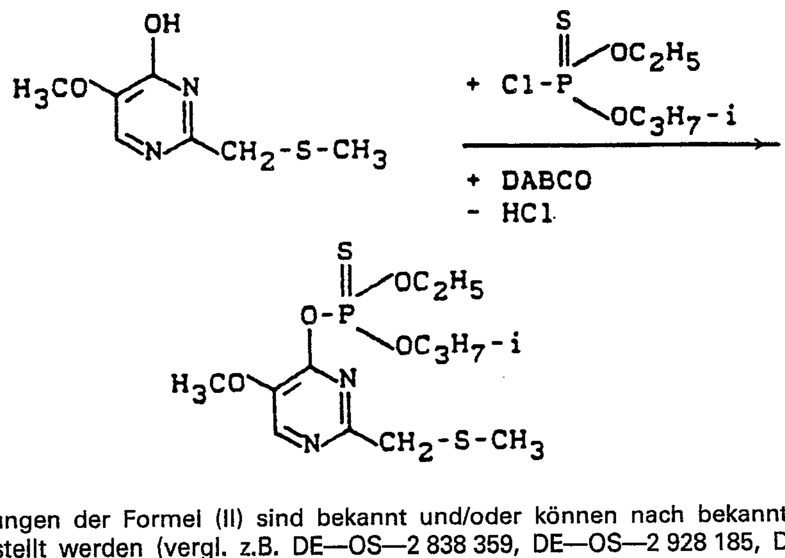


Die Verbindungen der Formel (II) sind bekannt und/oder können nach bekannten Methoden und Verfahren hergestellt werden (vergl. z.B. DE—OS—2 838 359, DE—OS—2 928 185, DE—OS—3 211 035, US—PS—3 244 586, US—PS—4 115 557, DE—AS—2 260 015, DE—OS—2 630 054 und US—PS—4 152 426).

Als Alkali- oder Erdalkalimetallsalze der Verbindungen der Formel (II) werden vorzugsweise die Natrium-, Kalium- oder Calciumsalze und als Ammoniumsalze vorzugsweise die Ammonium- oder Tri-$C_1$—$C_4$-Alkylammoniumsalze, wie Trimethylammonium- oder Triethylammoniumsalze eingesetzt.

Als Beispiele für die Verbindungen der Formel (II) bzw. die entsprechenden Natrium-, Kalium-, Calcium- und Ammoniumsalze seien genannt:

Phenol, 2-Cyano-, 2-Nitro-, 2-Chlor-, 2-Brom-, 2-Phenyl-, 2-Methyl-, 2-Ethyl-, 2-n-Propyl-, 2-iso-Propyl-, 2-n-Butyl-, 2-iso-Butyl-, 2-sec.-Butyl-, 2-tert.-Butyl-, 2-Methoxy-, 2-Ethoxy-, 2-n-Propoxy-, 2-iso-Propoxy-, 2-n-Butoxy-, 2-iso-Butoxy-, 2-sec.-Butoxy-, 2-tert.-Butoxy-, 2-Methylthio-, 2-Ethylthio-, 2-n-Propylthio-, 2-iso-Propylthio-, 2-Methoxycarbonyl-, 2-Ethoxycarbonyl-, 2-n-Propoxycarbonyl-, 2-i-Propoxycarbonyl-, 3-Chlor-, 3-Methoxy-, 3-Ethoxy-, 4-Chlor-, 4-Cyano-, 4-Nitro-, 4-Methylthio-, 4-Ethylthio-, 4-Methoxy-, 4-Ethoxy-, 4-Methylsulfonyl-, 4-Ethylsulfonyl-, 4-Methyl-, 4-Ethyl-, 4-n-Propyl-, 4-iso-Propyl-, 4-n-Butyl-, 4-iso-Butyl-, 4-sec.-Butyl-, 4-tert.-Butyl-, 2,4-Dichlor- und 2,4-Dimethylphenol;

2-Hydroxy-pyridin, 6-Chlor-, 6-Brom-, 6-Fluor-, 3,4-Dichlor-, 3,5-Dichlor-, 3,6-Dichlor-, 3,5-Dibrom-, 3,4,5-Trichlor-, 3,5,6-Trichlor-, 4,5,6-Trichlor-, 3,4,5,6-Tetrachlor- und 5-Trifluormethyl-2-hydroxy-pyridin;

1-Methyl-, 1-Ethyl-, 1-n-Propyl-, 1-i-Propyl-, 1-n-Butyl-, 1-i-Butyl-, 1-sec.-Butyl-, 1-tert.-Butyl-, 1-Phenyl-5-chlor- bzw. -5-brom-3-hydroxy-1,2,4-triazol und 3-Hydroxy-1,2,4-triazol;

2-Hydroxy-pyrimidin, 4-Hydroxy-pyrimidin, 5-Hydroxy-pyrimidin; 5-Fluor-, 5-Chlor- und 5-Brom-2-hydroxy-pyrimidin;

2-Isopropyl-, 6-Methyl-, 2,6-Dimethyl-, 2-Ethyl-6-methyl-, 2-n-Propyl-6-methyl-, 2-i-Propyl-6-methyl-, 2-n-Butyl-6-methyl-, 2-i-Butyl-6-methyl-, 2-sec.-Butyl-6-methyl-, 2-tert.-Butyl-6-methyl-, 6-tert.-Butyl-, 2-Methyl-6-tert.-butyl-, 2-Methoxy-6-methyl-, 2-Ethoxy-6-methyl-, 2-i-Propoxy-6-methyl-, 2-Methylthio-6-methyl-, 2-i-Propylthio-6-methyl-, 2-Phenyl-6-methyl-, 2-Cyclopropyl-6-methyl-, 2-Cyclohexyl-6-methyl-, 2-Dimethylamino-6-methyl-, 2-Diethylamino-6-methyl-, 2-Methoxymethyl-5-methoxy-, 2-Methylthiomethyl-5-methoxy-, 2-Methylsulfinylmethyl-5-methoxy-, 2-Methylsulfonylmethyl-5-methoxy-, 2-Methylthiomethyl-5-ethoxy-, 2-Methoxymethyl-5-ethoxy-, 2-i-Propyl-5-methylthio-, 2-i-Propyl-5-chlor-6-methyl-, 2-tert.-Butyl-5-chlor-6-methyl-, 2-i-Propyl-5-brom-6-methyl-, 2-tert.-Butyl-5-brom-6-methyl-, 6-Phenyl-, 2-Methyl-6-phenyl-, 2-i-Propyl-6-phenyl-, 2-Ethyl-6-ethoxy-, 2-i-Propyl-6-methoxy-, 2-i-Propyl-6-ethoxy-, 2-tert.-Butyl-6-methoxy-, 2-i-Propyl-6-(methylthio-methoxy)-, 2-Cyclopropyl-6-ethoxy- und 2-i-Propyl-5,6-dimethyl-4-hydroxy-pyrimidin;

2-Methyl-, 2-Ethyl-, 2-n-Propyl-, 2-i-Propyl-, 2-n-Butyl-, 2-i-Butyl-, 2-sec.-Butyl-, 2-tert.-Butyl-, 2-Phenyl-, 2-Cyclopropyl-, 2-Cyclobutyl-, 2-Cyclopentyl-, 2-Cyclohexyl-, 2-Cyclopropyl-4-methyl-, 2-Phenyl-4-methyl-, 2,4-Dimethyl-, 2-Ethyl-4-methyl-, 2-n-Propyl-4-methyl-, 2-i-Propyl-4-methyl-, 2-n-Butyl-4-methyl-, 2-i-Butyl-4-methyl-, 2-sec.-Butyl-4-methyl-, 2-tert.-Butyl-4-methyl-, 2-Cyclopropyl-4-ethyl-, 2-Phenyl-4-ethyl-, 2-Methyl-4-ethyl-, 2,4-Diethyl-, 2-n-Propyl-4-ethyl-, 2-i-Propyl-4-ethyl-, 2-n-Butyl-4-ethyl-, 2-i-Butyl-4-ethyl-, 2-sec.-Butyl-4-ethyl- und 2-tert.-Butyl-4-ethyl-5-hydroxy-pyrimidin.

Die Verbindungen der Formel (III) sind bekannt.

Als Beispiele für die Verbindungen der Formel (III) seien genannt:

O,O-Dimethyl-, O,O-Diethyl-, O,O-Di-n-propyl-, O,O-Di-i-propyl-, O,O-Di-n-butyl-, O,O-Di-i-butyl-, O-Methyl-O-ethyl-, O-Methyl-O-n-propyl-, O-Methyl-O-i-propyl-, O-Methyl-O-i-propyl-, O-Methyl-O-n-butyl-, O-Methyl-O-i-butyl-, O-Methyl-O-sec.-butyl-, O-Methyl-O-tert.-butyl-, O-Ethyl-O-n-propyl-, O-Ethyl-O-i-propyl-, O-Ethyl-O-n-butyl-, O-Ethyl-O-i-butyl-, O-Ethyl-O-sec.-butyl-, O-ethyl-O-tert.-butyl-, O-n-Propyl-O-i-propyl-, O-n-Propyl-O-n-butyl-, O-n-Propyl-O-i-butyl-, O-n-Propyl-O-sec.-butyl-, O-n-Propyl- O-tert.-butyl-, O-i-Propyl-O-n-butyl-, O-n-Butyl-O-i-butyl-, O-n-Butyl-O-sec.-butyl und O-n-Butyl-O-tert.-butyl-phosphorsäurediesterchlorid bzw. -bromid sowie die entsprechenden Thionoanalogen.

Das erfindungsgemäße Verfahren zur Herstellung von (Thiono)Phosphorsäureestern wird im allgemeinen unter Verwendung von Verdünnungsmitteln durchgeführt. Als solche kommen praktisch alle inerten organischen Lösungsmittel in Frage. Hierzu gehören insbesondere aliphatische und aromatische, gegebenenfalls chlorierte aliphatische oder aromatische Kohlenwasserstoffe, wie Benzin, Benzol, Toluol, Xylol, Methylenchlorid, Chloroform, Tetrachlorkohlenstoff, Chlorbenzol und o-Dichlorbenzol, Ether wie Diethyl- und Dibutylether, Tetrahydrofuran und Dioxan, Ketone wie Aceton, Methylethyl-, Methylisopropyl- und Methylisobutylketon sowie Nitrile wie Acetonitril und Propionitril.

Das erfindungsgemäße Verfahren wird in Gegenwart eines bicyclischen organischen Amins vorzugsweise in Gegenwart von 1,4-Diazabicyclo-(2,2,2)-octan (DABCO) als Katalysator durchgeführt. Das bicyclische organische Amin kann zugleich auch als Säureakzeptor verwendet werden. In diesem Falle werden wenigstens molare Mengen des bicyclischen organischen Amins eingesetzt.

Falls das bicyclische organische Amin nicht zugleich als Säurebindemittel dient, wird es unter Verwendung von Säureakzeptoren durchgeführt. Als Säureakzeptoren können alle üblichen Säurebindemittel Verwendung finden. Besonders bewährt haben sich Alkalicarbonate wie Natrium- und Kaliumcarbonat, ferner aliphatische, aromatische oder heterocyclische Amine, beispielsweise Triethylamin, Trimethylamin, Dimethylanilin, Dimethylbenzylamin und Pyridin.

In einer bevorzugten Ausführungsform werden als Säureakzeptoren Alkalicarbonate insbesondere $Na_2CO_3$ und/oder $K_2CO_3$ und als Katalysator katalytische Mengen DABCO eingesetzt.

Das erfindungsgemäße Verfahren wird im allgemeinen bei Temperaturen zwischen 0°C und 120°C

durchgeführt. Bevorzugt ist der Temperaturbereich zwischen 20°C und 100°C. die Umsetzungen werden im allgemeinen bei Normaldruck durchgeführt.

Zur Durchführung des erfindungsgemäßen Verfahrens werden auf 1 Mol Hydroxy-Derivat der Formel (II) zweckmäßigerweise 0,8 bis 1,5, vorzugsweise 1,0 bis 1,3, insbesondere 1,0 bis 1,2 Mol (Thiono)-Phosphorsäurehalogenid der Formel (II) wevendet. Je mol der Hydroxy-Verbindung der Formel (II) werden zweckmäßigerweise 0,005 bis 0,5, vorzugsweise 0,01 bis 0,08, insbesondere 0,02 bis 0,06 Mol bicyclisches organisches Amin (insbesondere DABCO) eingesetzt.

Die Umsetzung wird im allgemeinen in einem Verdünnungsmittel in Gegenwart eines Säureakzeptors durchgeführt. Der Säureakzeptor wird in Mengen zugefügt, welche geeignet sind, den entstehenden Halogenwasserstoff zu binden. Vorzugsweise werden je mol Hydroxy-Derivat der Formel (II) 0,8 is 1,5, insbesondere 0,9 bis 1,3 und besonders bevorzugt 1,0 bis 1,2 Mol bzw. Äquivalent Säureakzeptor eingesetzt. Nach Ablauf der Reaktion wird filtriert und das Lösungsmittel im Vakuum abdestilliert.

Die Verbindungen der Formel (I) fallen in Form von Ölen an, die sich zum Teil nicht unzersetzt destillieren lassen, jedoch durch sogenanntes "Andestillieren", d.h. durch längeres Erhitzen unter vermindertem Druck auf mäßig erhöhte Temperaturen von den letzten flüchtigen Anteilen befreit und auf diese Weise gereinigt werden. Zu ihrer Charakterisierung dient der Brechungsindex.

Die erfindungsgemäß erhältlichen Verbindungen der allgemeinen Formel (I) sind wertvolle Schädlingsbekämpfungsmittel. Sie zeichnen sich vor allem durch eine hervorragende insektizide, akarizide und nematizide Wirkung aus. Sie wirken gegen Pflanzen-, Hygiene- und Vorratsschädlinge. Sie besitzen bei geringer Phytotoxizität sowohl eine gute Wirkung gegen saugende als auch fressende Insekten und Milben.

Aus diesem Grunde können die erfindungsgemäß erhältichen Verbindungen der allgemeinen Formel (I) mit Erfolg im Pflanzenschutz sowie auf dem Hygiene-, Vorratsschutz- und Veterinärsektor als Schädlingsbekampfungsmittel eingesetzt werden.

Die erfindungsgemäße erhältlichen Verbindungen der Formel (I) können in den üblichen Formulierungen (mit 0,5 bis 95% Wirkstoff), wie Stäubepulver, Granulaten, emulgierbaren Konzentraten, Spriztpulver oder Ultralow-volume-Formulierungen in üblicher Weise, gegebenenfalls nach Verdünnung mit Wasser, auf die Pflanzen oder Böden ausgebracht werden. Je Hektar zu behandelnde fläche werden zweckmäßigerweise etwa 0,1 bis 2,5 kg Wirkstoff eingesetzt.

Viele der erfindungsgemäß erhältlichen Verbindungen und ihre Verwendung sind bekannt und werden beschrieben z.B. in DE—OS—2 643 262, DE—OS—2 714 771, US—PS—4 127 652, DE—OS—3 326 510, EP—A—0 009 566, US—PS—4 325 948, US—PS—4 444 764, US—PS—4 429 125, US—PS—3 244 586 und DE—OS—3 317 824.

## Herstellungsbeispiele

### Beispiel 1

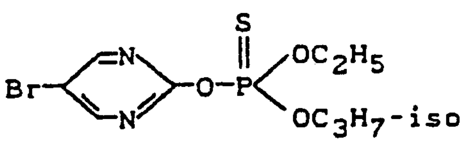

Zu einer Mischung aus 17,5 g (0,1 Mol) 2-Hydroxy-5-brompyrimidin (Darst. DE—OS—2 507 702), 20,7 g (0,15 Mol) Kaliumcarbonat, 20,2 g (0,1 Mol) O-Ethyl-O-i-propyl-thionophosphorsäurediesterchlorid und 300 ml Acetonitril werden bei 20°C 0,2 g (0,0018 Mol) Diazabicyclooctan (DABCO) gegeben. Das Reaktionsgemisch wird eine Stunde ohne Heizung nachgerührt, mit 400 ml Toluol versetzt und zweimal mit je 200 ml Wasser geschüttelt. Die organische Phase wird abgetrennt, über Natriumsulfat getrocknet und im Vakuum eingedampft.

Nach Andestillieren bei 80°C im Hochvakuum erhält man 27 g (79% der Theorie) O-Ethyl-O-i-propyl-O-(5-brompyrimidin-2-yl)-thionophosphorsäureester in Form eines hellbraunen Öles mit dem Brechungsindex $n_D^{22}$: 1,5179 zurück.

### Beispiel 2

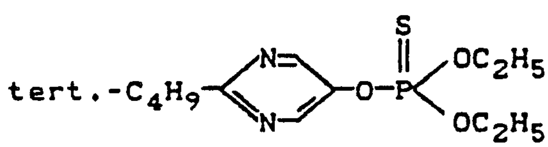

Zu einer Mischung aus 277 g (1,82 Mol) 2-tert.-Butyl-5-hydroxypyrimidin, 306,3 g (2,22 Mol) Kaliumcarbonat, 12,4 g (0,11 Mol) DABCO und 2 l Toluol gibt man auf einmal 344 g (1,82 Mol) O,O-Diethyl-thionophosphorsäurediesterchlorid. Die Temperatur steigt dabei bis auf ca. 35°C an. Man rührt 4 Stunden ohne Heizung nach, saugt vom anorganischen Salz ab, wäscht mit Tuluol nach und dampft dann das Filtrat im Vakuum ein. Der Rückstand wird bei 60°C im Hochvakuum andestilliert.

Man erhält so 516 g (93% der Theorie) O,O-Diethyl-O-(2-tert.-butyl-pyrimidin-5-yl)-thionophosphorsäureester vom Brechungsindex $n_D^{26}$: 1,4902.

Analog Beispiel 1 und 2 können z.B. die folgenden Verbindungen hergestellt werden:

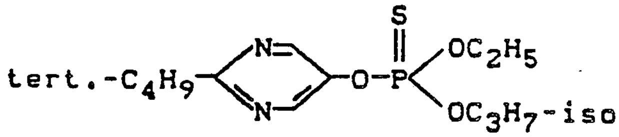

Ausbeute:
96 % der Theorie

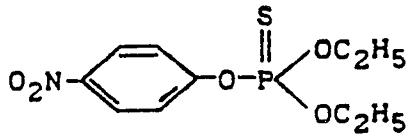

Ausbeute:
95 % der Theorie

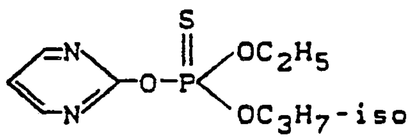

Ausbeute:
85 % der Theorie

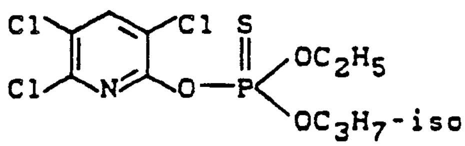

Ausbeute:
98 % der Theorie

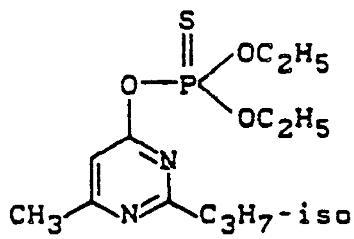

Ausbeute:
96 % der Theorie

Vergleichsbeispiel (ohne Katalysator):

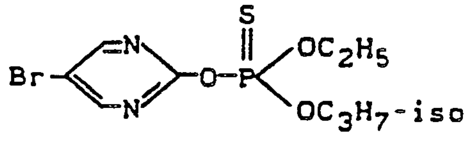

Eine Mischung aus 17,5 g (0,1 Mol) 2-Hydroxy-5-brom-pyrimidin (Darst. DE—OS—2 507 702), 20,7 g (0,15 Mol) Kaliumcarbonat, 20,2 g (0,1 Mol) O-Ethyl-O-i-propylthionophosphorsäurediesterchlorid und 300 ml Acetonitril wird 23 Stunden bei 50°C gerührt. Dann wird auf 20°C abgekühlt, mit 400 ml Toluol versetzt und zweimal mit je 200 ml Wasser geschüttelt. Die organische Phase wird abgetrennt, über Natriumsulfat getrocknet und im Vakuum eingedampft.

Nach Andestillieren bei 80°C im Hochvakuum bleiben 12,8 g (38% der Theorie) O-Ethyl-O-i-propyl-O-(5-brom-pyrimidin-2-yl)-thionophosphorsäureester in Form eines hellbraunen Oles mit dem Brechungsindex $n_D^{21}$: 1,5182 zurück.

**Patentansprüche**

1. Verfahren zur Herstellung von (Thiono)Phosphorsäureestern der Formel (I)

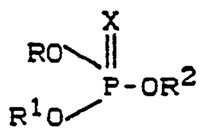

(I)

in welcher
X für Sauerstoff oder Schwefel steht,
R und $R^1$ gleich oder verschieden sind und für Alkyl stehen und
$R^2$ für gegebenenfalls einfach bis dreifach durch Fluor, Chlor, Brom, Nitro, Cyano, $C_1$—$C_4$-Alkyl, $C_1$—$C_4$-Alkoxy, Phenyl, $C_1$—$C_4$-Alkylthio, Halogen-$C_1$—$C_4$-alkyl, Halogen-$C_1$—$C_4$-alkoxy, Halogen-$C_1$—$C_4$-alkylthio, $C_1$—$C_4$-Alkylsulfinyl, $C_1$—$C_4$-Alkylsulfonyl, $C_1$—$C_2$-Alkylsulfinyl-$C_1$—$C_4$-alkyl, $C_1$—$C_2$-Alkylsulfonyl-$C_1$—$C_4$-alkyl und/oder $C_1$—$C_4$-Alkoxycarbonyl substituiertes Phenyl; für gegebenenfalls einfach bis dreifach durch Chlor, Brom, $C_1$—$C_4$-Alkyl, $C_1$—$C_4$-Alkoxy, $C_1$—$C_4$-Alkylthio, $C_3$—$C_6$-Cycloalkyl, Phenyl, Di-($C_1$—$C_4$)-alkylamino, $C_1$—$C_2$-Alkoxy-$C_1$—$C_4$-alkyl, $C_1$—$C_2$-Alkylthio-$C_1$—$C_4$-alkyl, $C_1$—$C_2$-Alkylthio-$C_1$—$C_4$-Alkoxy, $C_1$—$C_2$-Alkylsulfinyl-$C_1$—$C_4$-alkyl und/oder $C_1$—$C_2$-Alkylsulfonyl-$C_1$—$C_4$-alkyl substituiertes Pyrimidin-2-yl, Pyrimidin-4-yl oder Pyrimidin-5-yl; für gegebenenfalls einfach oder zweifach durch $C_1$—$C_4$-Alkyl und/oder Phenyl substituiertes 1,2,4-Triazol-3-yl; sowie für gegebenenfalls einfach bis dreifach durch Chlor, Brom und/oder Halogen-$C_1$—$C_2$-alkyl substituiertes Pyrid-2-yl steht,
dadurch gekennzeichnet, daß man Hydroxy-Derivate der Formel (II)

$$R^2—OH \quad (II)$$

in welcher
$R^2$ die oben angegebene Bedeutung hat,
oder deren entsprechenden Ammonium-, Alkali- oder Erdalkalimetallsalze, mit (Thiono)Phosphorsäurehalogeniden der Formel (III)

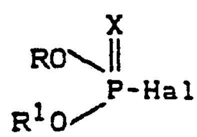

(III)

in welcher
X, R und $R^1$ die oben angegebenen Bedeutungen haben und
Hal für Halogen steht,
in Gegenwart eines bicyclischen organischen Amins als Katalysator, gegebenenfalls in Gegenwart von Säureakzeptoren, und in Gegenwart eines Verdünnungsmittels bei Temperaturen zwischen 0 und 120°C umsetzt.

2. Verfahren gemäß Anspruch 1, wobei in den Formeln (I), (II) und (III)
X für Sauerstoff oder Schwefel steht,
R und $R^1$ gleich oder verschieden sind und für $C_1$—$C_6$ Alkyl stehen und
$R^2$ für gegebenenfalls einfach bis dreifach durch Fluor, Chlor, Brom, Nitro, Cyano, $C_1$—$C_4$-Alkyl, $C_1$—$C_4$-Alkoxy, Phenyl, $C_1$—$C_4$-Alkylthio, Halogen-$C_1$—$C_4$-alkyl, Halogen-$C_1$—$C_4$-alkoxy, Halogen-$C_1$—$C_4$-alkylthio, $C_1$—$C_4$-Alkylsulfinyl, $C_1$—$C_4$-Alkylsulfonyl, $C_1$—$C_2$-Alkylsulfinyl-$C_1$—$C_4$-alkyl, $C_1$—$C_2$-Alkylsulfonyl-$C_1$—$C_4$-alkyl und/oder $C_1$—$C_4$-Alkoxycarbonyl substituiertes Phenyl; für gegebenenfalls einfach bis dreifach durch Chlor, Brom, $C_1$—$C_4$-Alkyl, $C_1$—$C_4$-Alkoxy, $C_1$—$C_4$-Alkylthio, $C_3$—$C_6$-Cycloalkyl, Phenyl, Di-($C_1$—$C_4$)-alkylamino, $C_1$—$C_2$-Alkoxy-$C_1$—$C_4$-alkyl, $C_1$—$C_2$-Alkylthio-$C_1$—$C_4$-alkyl, $C_1$—$C_2$-Alkylthio-$C_1$—$C_4$-Alkoxy, $C_1$—$C_2$-Alkylsulfinyl-$C_1$—$C_4$-alkyl und/oder $C_1$—$C_2$-Alkylsulfonyl-$C_1$—$C_4$-alkyl substituiertes Pyrimidin-2-yl, Pyrimidin-4-yl oder Pyrimidin-5-yl; für gegebenenfalls einfach oder zweifach durch $C_1$—$C_4$-Alkyl und/oder Phenyl substituiertes 1,2,4-Triazol-3-yl; sowie für gegebenenfalls einfach bis dreifach durch Chlor, Brom und/oder Halogen-$C_1$—$C_2$-alkyl substituiertes Pyrid-2-yl steht, und
Hal für Chlor steht.

3. Verfahren gemäß Anspruch 1, wobei in den Formeln (I), (II) und (III)
X für Sauerstoff oder Schwefel steht,
R und $R^1$ gleich oder verschieden sind und für $C_1$—$C_4$-Alkyl (vorzugsweise Ethyl oder i-Propyl) stehen und

$R^2$ für 4-Nitrophenyl, Pyrimidin-2-yl, 5-Brom-pyrimidyl-2-yl, 5-tert.-Butyl-pyrimidin-2-yl, 2-i-Propyl-4-methyl-pyrimidin-6-yl oder 2,3,5-Trichlorpyridin-6-yl steht, und
Hal für Chlor steht.

4. Verfahren gemäß den Ansprüchen 1 bis 3, wobei in den Formeln (I) und (III) X für Schwefel steht.

5. Verfahren gemäß den Ansprüchen 1 bis 3, wobei in den Formeln (I), (II) und (III)
X für Schwefel steht,
R für Ethyl steht,
$R^1$ für i-Propyl steht,
$R^2$ für 5-tert.-Butyl-pyrimidin-2-yl und
Hal für Chlor steht.

6. Verfahren gemäß den Ansprüchen 1 bis 5, dadurch gekennzeichnet, daß die Umsetzung bei 20 bis 100°C durchgeführt wird.

7. Verfahren gemäß den Ansprüchen 1 bis 6, dadurch gekennzeichnet, daß auf 1 mol der Hydroxy-Verbindung der Formel (II) 0,8 bis 1,5 mol der Verbindungen der Formel (III) eingesetzt werden.

8. Verfahren gemäß den Ansprüchen 1 bis 7, dadurch gekennzeichnet, daß je mol der Verbindungen der Formel (II) 0,005 bis 0,5 mol bicyclisches organisches Amin als Katalysator eingesetzt wird.

9. Verfahren gemäß den Ansprüchen 1 bis 8, dadurch gekennzeichnet, daß als bicyclisches organisches Amin 1,4-Diazabicyclo-(2,2,2)-octan (DABCO) eingesetzt wird.

10. Verfahren gemäß den Ansprüchen 1 bis 9, dadurch gekennzeichnet, daß Kaliumcarbonat als Säureakzeptor verwendet wird.

**Revendications**

1. Procédé de production d'esters d'acide (thiono)phosphorique de formule (I)

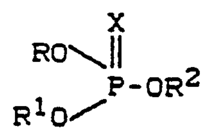

(I)

dans laquelle
X désigne l'oxygène ou le soufre,
R et $R^1$ sont identiques ou différents et représentent des groupes alkyle et
$R^2$ est un groupe phényle portant éventuellement un à trois substituants fluoro, chloro, bromo, nitro, cyano, alkyle en $C_1$ à $C_4$, alkoxy en $C_1$ à $C_4$, phényle, alkylthio en $C_1$ à $C_4$, halogénalkyle en $C_1$ à $C_4$, halogénalkoxy en $C_1$ à $C_4$, halogénalkylthio en $C_1$ à $C_4$, alkylsulfinyle en $C_1$ à $C_4$, alkylsulfonyle en $C_1$ à $C_4$, (alkylsulfinyle en $C_1$ à $C_2$)-alkyle en $C_1$ à $C_4$, (alkylsulfonyle en $C_1$ ou $C_2$)-alkyle en $C_1$ à $C_4$ et/ou (alkoxy en $C_1$ à $C_4$)-carbonyle; un groupe pyrimidine-2-yle, pyrimidine-4-yle ou pyrimidine-5-yle portant éventuellement 1 à 3 substituants chloro, bromo, alkyle en $C_1$ à $C_4$, alkoxy en $C_1$ à $C_4$, alkylthio en $C_1$ à $C_4$, cycloalkyle en $C_3$ à $C_6$, phényle, di(alkyle en $C_1$ à $C_4$)-amino, (alkoxy en $C_1$ ou $C_2$)-alkyle en $C_1$ à $C_4$, (alkylthio en $C_1$ ou $C_2$)-alkyle en $C_1$ à $C_4$, (alkylthio en $C_1$ ou $C_2$)-alkoxy en $C_1$ à $C_4$, (alkylsulfinyle en $C_1$ ou $C_2$)-alkyle en $C_1$ à $C_4$ et/ou (alkylsulfonyle en $C_1$ ou $C_2$)-alkyle en $C_1$ à $C_4$; un groupe 1,2,4-triazole-3-yle portant éventuellement un ou deux substituants alkyle en $C_1$ à $C_4$ et/ou phényle; ainsi qu'un groupe pyrid-2-yle portant éventuellement un à trois substituants chloro, bromo et/ou halogénalkyle en $C_1$ à $C_2$,
caractérisé en ce qu'on fait réagir des dérivés hydroxyliques de formule (II)

$$R^2\text{—OH} \qquad \text{(II)}$$

dans laquelle
$R^2$ a la définition indiquée ci-dessus,
ou leurs sels correspondants d'ammonium, de métaux alcalins ou de métaux alcalino-terreux, avec des halogénures d'acide (thiono)-phosphorique de formule (III)

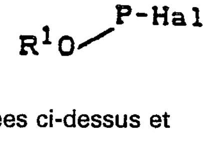

(III)

dans laquelle
X, R et $R^1$ ont les définitions indiquées ci-dessus et
Hal est un halogène,
en présence d'une amine organique bicyclique comme catalyseur, le cas échéant en présence d'accepteurs d'acides et en la présence d'un diluant, à des températures comprises entre 0 et 120°C.

2. Procédé suivant la revendication 1, dans lequel, dans les formules (I), (II) et (III),

X désigne l'oxygène ou le soufre,

R et $R^1$ sont identiques ou différents et représentent des groupes alkyle en $C_1$ à $C_6$ et

$R^2$ est un groupe phényle portant éventuellement un à trois substituants fluoro, chloro, bromo, nitro, cyano, alkyle en $C_1$ à $C_4$, alkoxy en $C_1$ à $C_4$, phényle, alkylthio en $C_1$ à $C_4$, halogénalkyle en $C_1$ à $C_4$, halogénalkoxy en $C_1$ à $C_4$, halogénalkylthio en $C_1$ à $C_4$, alkylsulfinyle en $C_1$ à $C_4$, alkylsulfonyle en $C_1$ ou $C_4$, (alkylsulfinyle en $C_1$ à $C_2$)-alkyle en $C_1$ à $C_4$, (alkylsulfonyle en $C_1$ ou $C_2$)-alkyle en $C_1$ à $C_4$ et/ou (alkoxy en $C_1$ à $C_4$)-carbonyle; un groupe pyrimidine-2-yle, pyrimidine-4-yle ou pyrimidine-5-yle portant éventuellement 1 à 3 substituants chloro, bromo, alkyle en $C_1$ à $C_4$, alkoxy en $C_1$ à $C_4$, alkylthio en $C_1$ à $C_4$, cycloalkyle en $C_3$ à $C_6$, phényle, di(alkyle en $C_1$ à $C_4$)-amino, (alkoxy en $C_1$ à $C_2$)-alkyle en $C_1$ à $C_4$, (alkylthio en $C_1$ à $C_2$)-alkyle en $C_1$ à $C_4$, (alkylthio en $C_1$ ou $C_2$)-alkoxy en $C_1$ à $C_4$, (alkylsulfinyle en $C_1$ à $C_2$)-alkyle en $C_1$ à $C_4$ et/ou (alkylsulfonyle en $C_1$ à $C_2$)-alkyle en $C_1$ à $C_4$; un groupe 1,2,4-triazole-3-yle portant éventuellement un ou deux substituants alkyle en $C_1$ à $C_4$ et/ou phényle; ainsi qu'un groupe pyrid-2-yle portant éventuellement un à trois substituants chloro, bromo et/ou halogénalkyle en $C_1$ à $C_2$, et

Hal désigne le chlore.

3. Procédé suivant la revendication 1, dans lequel, dans les formules (I), (II) et (III),

X désigne l'oxygène ou le soufre,

R et $R^1$ sont identiques ou différents et représentent des groupes alkyle en $C_1$ à $C_4$ (de préférence éthyle ou isopropyle) et

$R^2$ est un groupe 4-nitrophényle, pyrimidine-2-yle, 5-bromopyrimidyl-2-yle, 5-tertiobutylpyrimidine-2-yle, 2-isopropyl-4-méthylpyrimidine-6-yle ou 2,3,5-trichloropyridine-6-yle, et

Hal désigne le chlore.

4. Procédé suivant les revendications 1 à 3, dans lequel X représente le soufre dans les formules (I) et (III).

5. Procédé suivant les revendications 1 à 3, dans lequel, dans les formules (I), (II) et (III),

X représente le soufre,

R représente un groupe éthyle,

$R^1$ est un groupe isopropyle,

$R^2$ est un groupe 5-tertiobutylpyrimidine-2-yle et

Hal représente le chlore.

6. Procédé suivant les revendications 1 à 5, caractérisé en ce que la réaction est conduite à une température de 20 à 100°C.

7. Procédé suivant les revendications 1 à 5, caractérisé en ce qu'on utilise par mole de composé hydroxylique de formule (II), 0,8 à 1,5 mole des composés de formule (III).

8. Procédé suivant les revendications 1 à 7, caractérisé en ce qu'on utilise par mole des composés de formule (II), 0,005 à 0,5 mol d'amine organique bicyclique comme catalyseur.

9. Procédé suivant les revendications 1 à 8, caractérisé en ce qu'on utilise comme amine organique bicyclique le 1,4-diazabicyclo-(2,2,2)-octane (DABCO).

10. Procédé suivant les revendications 1 à 9, caractérisé en ce qu'on utilise le carbonate de potassium comme accepteur d'acide.

**Claims**

1. Process for the preparation of (thiono)phosphoric esters of the formula (I(

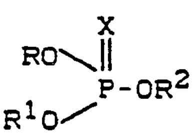

(I)

in which

X represents oxygen or sulphur,

R and $R^1$ are identical or different and represent alkyl, and

$R^2$ represents phenyl which is optionally substituted once to three times by fluorine, chlorine, bromine, nitro-, cyano, $C_1$—$C_4$-alkyl, $C_1$—$C_4$-alkoxy, phenyl, $C_1$—$C_4$-alkylthio, halogeno-$C_1$—$C_4$-alkyl, halogeno-$C_1$—$C_4$-alkoxy, halogeno-$C_1$—$C_4$-alkylthio, $C_1$—$C_4$-alkylsulphinyl, $C_1$—$C_4$-alkylsulphonyl, $C_1$—$C_2$-alkylsulphinyl-$C_1$—$C_4$-alkyl, $C_1$—$C_2$-alkylsulphonyl-$C_1$—$C_4$-alkyl and/or $C_1$—$C_4$-alkoxycarbonyl; represents pyrimidin-2-yl, pyrimidin-4-yl or pyrimidin-5-yl which is optionally substituted once to three times by chlorine, bromine, $C_1$—$C_4$-alkyl, $C_1$—$C_4$-alkoxy, $C_1$—$C_4$-alkylthio, $C_3$—$C_6$-cycloalkyl, phenyl, di-($C_1$—$C_4$)-alkylamino, $C_1$—$C_2$-alkoxy-$C_1$—$C_4$-alkyl, $C_1$—$C_2$-alkylthio-$C_1$—$C_4$-alkyl, $C_1$—$C_2$-alkylthio-$C_1$—$C_4$-alkoxy, $C_1$—$C_2$-alkylsulphinyl-$C_1$—$C_4$-alkyl and/or $C_1$—$C_2$-alkylsulphonyl-$C_1$—$C_4$-alkyl; represents 1,2,4-triazol-3-yl which is optionally substituted once or twice by $C_1$—$C_4$-alkyl and/or phenyl; and represents pyrid-2-yl

which is optionally substituted once to three times by chlorine, bromine and/or halogeno-$C_1$—$C_2$-alkyl, characterized in that hydroxyl derivatives of the formula (II)

$$R^2—OH \quad (II)$$

in which

$R^2$ has the abovementioned meaning,

or their appropriate ammonium, alkali metal or alkaline earth metal salts, are reacted with (thiono)phosphoric halides of the formula (III)

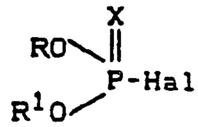

(III)

in which

X, R and $R^1$ have the abovementioned meanings, and

Hal represents halogen,

in the presence of a bicyclic organic amine as catalyst, where appropriate in the presence of acid acceptors, and in the presence of a diluent, at temperatures between 0 and 120°C.

2. Process according to Claim 1, where in the formulae (I), (II) and (III)

X represents oxygen or sulphur,

R and $R^1$ are identical or different and represent $C_1$—$C_6$-alkyl, and

$R^2$ represents phenyl which is optionally substituted once to three times by fluorine, chlorine, bromine, nitro-, cyano, $C_1$—$C_4$-alkyl, $C_1$—$C_4$-alkoxy, phenyl, $C_1$—$C_4$-alkylthio, halogeno-$C_1$—$C_4$-alkyl, halogeno-$C_1$—$C_4$-alkoxy, halogeno-$C_1$—$C_4$-alkylthio, $C_1$—$C_4$-alkylsulphinyl, $C_1$—$C_4$-alkylsulphonyl, $C_1$—$C_2$-alkylsulphinyl-$C_1$—$C_4$-alkyl, $C_1$—$C_2$-alkylsulphonyl-$C_1$—$C_4$-alkyl and/or $C_1$—$C_4$-alkoxycarbonyl; represents pyrimidin-2-yl, pyrimidin-4-yl or pyrimidin-5-yl which is optionally substituted once to three times by chlorine, bromine, $C_1$—$C_4$-alkyl, $C_1$—$C_4$-alkoxy, $C_1$—$C_4$-alkylthio, $C_3$—$C_6$-cycloalkyl, phenyl, di-($C_1$—$C_4$)-alkylamino, $C_1$—$C_2$-alkoxy-$C_1$—$C_4$-alkyl, $C_1$—$C_2$-alkylthio-$C_1$—$C_4$-alkyl, $C_1$—$C_2$-alkylthio-$C_1$—$C_4$-alkoxy, $C_1$—$C_2$-alkylsulphinyl-$C_1$—$C_4$-alkyl and/or $C_1$—$C_2$-alkylsulphonyl-$C_1$—$C_4$-alkyl; represents 1,2,4-triazol-3-yl which is optionally substituted once or twice by $C_1$—$C_4$-alkyl and/or phenyl; and represents pyrid-2-yl which is optionally substituted once to three times by chlorine, bromine and/or halogeno-$C_1$—$C_2$-alkyl, and Hal represents chlorine.

3. Process according to Claim 1, where in the formulae (I), (II) and (III)

X represents oxygen or sulphur,

R and $R^1$ are identical or different and represent $C_1$—$C_4$-alkyl (preferably ethyl or i-propyl), and

$R^2$ represents 4-nitrophenyl, pyrimidin-2-yl, 5-bromo-pyrimidyl-2-yl, 5-tert.-Butyl-pyrimidin-2-yl, 2-i-propyl-4-methyl-pyrimdin-6-yl or 2,3,5-trichloropyridin-6-yl, and Hal represents chlorine.

4. Process according to Claims 1 to 3, where in the formulae (I) and (III) X represents sulphur.

5. Process according to Claims 1 to 3, where in the formulae (I), (II) and (III)

X represents sulphur,

R represents ethyl,

$R^1$ represents i-propyl,

$R^2$ represents 5-tert.-butyl-pyrimidin-2-yl, and

Hal represents chlorine.

6. Process according to Claims 1 to 5, characterized in that the reaction is carried out at 20 to 100°C.

7. Process according to Claims 1 to 6, characterized in that 0.8 to 1.5 mol of the compounds of the formula (III) are used for 1 mol of the hydroxyl compound of the formula (II).

8. Process according to Claims 1 to 7, characterized in that 0.005 to 0.5 mol of bicyclic organic amine is used as catalyst per mol of the compounds of the formula (II).

9. Process according to Claims 1 to 8, characterized in that 1,4-diazabicyclo-(2,2,2)-octane (DABCO) is used as bicyclic organic amine.

10. Process according to Claims 1 to 9, characterized in that potassium carbonate is used as acid acceptor.